**Europäisches Patentamt**

**European Patent Office**

**Office européen des brevets**

(11) Veröffentlichungsnummer: **0 431 271 A1**

## (12) EUROPÄISCHE PATENTANMELDUNG

(21) Anmeldenummer: 90118542.1

(22) Anmeldetag: 27.09.90

(51) Int. Cl.5: **B23P 13/00, E02D 29/14**

(30) Priorität: 27.11.89 DE 3939125

(43) Veröffentlichungstag der Anmeldung:
**12.06.91 Patentblatt 91/24**

(84) Benannte Vertragsstaaten:
**AT BE CH DE ES FR GB IT LI LU NL SE**

(71) Anmelder: **PASSAVANT-WERKE AG**

**W-6209 Aarbergen 7(DE)**

(72) Erfinder: **Weiler, Walter, Dipl.-Ing.**
**Wilhelmstrasse 59**
**W-6252 Diez(DE)**

(54) **Verfahren zum Herstellen einer Schachtabdeckung.**

(57) Bei aus Gußteilen und Beton bestehenden Schachtabdeckungen werden die Auflageflächen des Deckels vor dem Einbringen bzw. Anformen des Betons bearbeitet. Es hat sich gezeigt, daß der erhärtende Beton zu einem Verzug der Auflageflächen über die geforderte Bearbeitungsgenauigkeit von 0,2 mm hinaus führt. Abhilfe wird durch das erfindungsgemäße Verfahren geboten, die Auflageflächen erst nach dem Einbringen bzw. Anformen und Erhärten des Betons zu bearbeiten.

EP 0 431 271 A1

## VERFAHREN ZUM HERSTELLEN EINER SCHACHTABDECKUNG

Die Erfindung bezieht sich auf ein Verfahren nach dem Oberbegriff von Anspruch 1.

Schachtabdeckungen dieser Art sind durch Normen in den Abmessungen und Festigkeitswerten vorgegeben. Sofern sie ohne dämpfende Einlage ausgestattet sind, muß die Auflagefläche des Deckels im Rahmen mit einer Höhengenauigkeit von 0,2 mm bearbeitet werden, um ein Klappern des Deckels im Rahmen durch Schnell- und Schwerverkehr zu vermeiden. Es ist üblich, die Gußschale des Deckels vor dem Einfüllen des Betons zu bearbeiten. Auch die Gußzarge des Rahmens wird zuerst bearbeitet und dann mit dem Beton verbunden. Man hat jedoch festgestellt, daß die Deckel und ggf. Rahmen nach dem Abbinden des Betons eine Höhenungenauigkeit von mehr als den zulässigen 0,2 mm aufweisen. Man hat als Ursache erkannt, daß der erhärtende Beton für den Verzug verantwortlich ist. Die Aufgabe, hier Abhilfe zu schaffen, wird gemäß der vorliegenden Erfindung dadurch gelöst, daß die Auflageflächen erst nach dem Einbringen, bzw Anformen, Verdichten und Erhärten des Betons bearbeitet werden.

Der Deckel und der Rahmen haben zwar bei dem Bearbeiten an Gewicht zugenommen und sind daher schwerer handhabbar; dieser Nachteil wird aber durch die Bearbeitungsgenauigkeit mehr als aufgehoben. Außerdem ergibt sich ein logistischer Vorteil: bisher mußten die Teile nach dem Einbringen der Betonfüllung bzw. Anformen des Betons auf einem Versandlagerplatz gesperrt gelagert werden, bis der Beton die vorgeschriebene Aushärtung erreicht hat. Diese Lagerung entfällt jetzt zugunsten einer Zwischenlagerung in der Produktion. Die Abdeckungen sind nach der Bearbeitung sofort versandfertig.

**Ansprüche**

Verfahren zum Herstellen einer aus Gußteilen und Beton bestehenden Schachtabdeckung, wobei die Auflageflächen des Deckels im Rahmen spanabhebend bearbeitet sind dadurch gekennzeichnet , daß die Auflageflächen erst nach dem Einbringen bzw. Anformen, Verdichten und Abbinden des Betons bearbeitet werden.

Europäisches
Patentamt

# EUROPÄISCHER RECHERCHENBERICHT

Nummer der Anmeldung

EP 90118542.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| Y | DE - A1 - 3 632 726 (PASSAVANT-WERKE AG) * Spalte 4, Zeilen 9-12; Fig. 2 * | 1 | B 23 P 13/00 E 02 D 29/14 |
| Y | DE - C1 - 3 742 698 (EMAG MASCHINENFABRIK) * Spalte 1, 2. Absatz * | 1 | |

RECHERCHIERTE
SACHGEBIETE (Int Cl⁵)

B 23 P 13/00
B 23 P 17/00
B 23 P 25/00
E 02 D 29/00
B 23 Q  1/00

Der vorliegende Recherchenbericht wurde für alle Patentansprüche erstellt.

| Recherchenort | Abschlußdatum der Recherche | Prüfer |
|---|---|---|
| WIEN | 13-02-1991 | BISTRICH |